# EUROPEAN PATENT APPLICATION

(11) **EP 1 265 455 A1**
(43) Date of publication of application: **11.12.2002**
(21) Application number: 01304936.6
(22) Date of filing: 06.06.2001
(51) Int. Cl.: H04Q 11/04

(54) **ISDN remote wake-up method**

(71) Applicant: WINBOND ELECTRONICS CORPORATION, Hsinchu (TW)
(72) Inventor: Lin, Jein Cherng, Hsinchu (TW); Shih, Chih Ta, Lu-Kang Chen, Changhua Hsien (TW); Chen, Hsin Chi, Tainan, Taiwan (TW)
(74) Representative: Beresford, Keith Denis Lewis

(57) **Abstract**

There is described a method for waking up devices connected to an ISDN network, the method comprising:
checking an acknowledgment response signal received at a terminal-end device (TE) of an ISDN;
comparing the content of a certain register with the wake-up information content in the acknowledgment response signal received at the TE, wherein the wake-up information includes a wake-up signal and an identifying value of an ISDN device;
storing the wake-up information on a specific IC when the comparison result is identified; and
performing the wake-up action to the ISDN device at the power-down mode based on the stored wake-up information.

## Description

### BACKGROUND OF THE INVENTION

### Field of the Invention

The present invention relates in general to a method for waking up a remote device. In particular, the present invention relates to an integrated services digital network (ISDN) remote wake-up method, which avoids the waste of network resources, and provides the elasticity for choosing a remote ISDN device to be woken up.

### Description of the Related Art

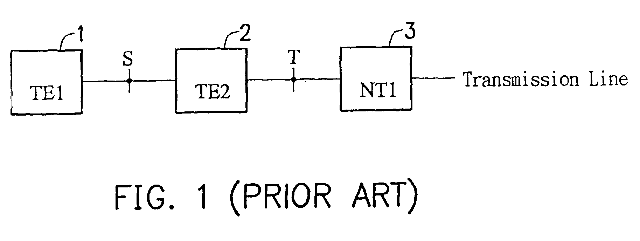

Fig. 1 is a schematic diagram of ISDN user-network interfaces. In Fig. 1, as defined in the Recommendation I.112 and used in Recommendation I.430 of the ITU-T, the term "NT" is used to indicate the layer 1 network side of the basic access interface; the term "TE" is used to indicate the layer 1 terminal side of the basic access interface. As shown in Fig. 1, NT1 can be an I/O port of the T1 PBX system from Telegram Office, for example, TE1 and TE2 can be an ISDN phone system, and S and T represent the tested points between interfaces. For example, the tested point between NT1 and TE2 is T, and the tested point between TE1 and TE2 is S. The tested points can show the condition of a transmission line, for example, whether the signal on the transmission line is normal or abnormal.

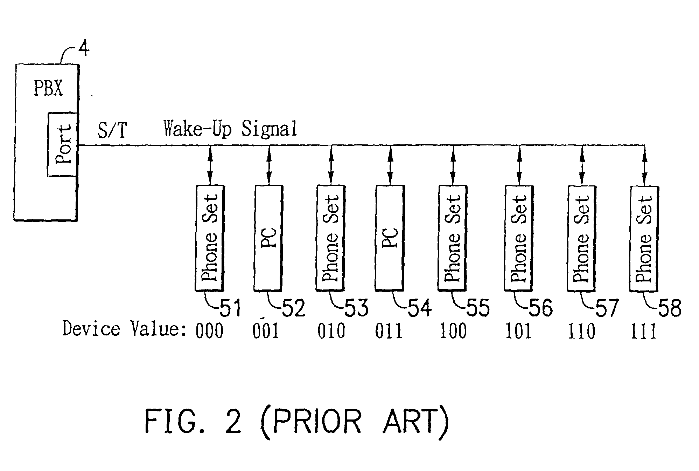

Fig. 2 is the configuration of a typical ISDN TE device. In fig. 2, the typical ISDN TE device includes a PBX 4, personal computers (PCs) 52 and 54 respectively have a modem inside, and phone sets 51, 53, 55-58. The PBX 4 is connected to PCs 52, 54 through an external modem (not shown) and a conducting line, for example, a coaxial cable, an optic fiber, twist line and the like, or directly connected to phone sets 51, 53, 55-58 through the S/T wires. As shown in Fig. 2, all S/T conducting lines are connected together. If a certain TE wants to determine whether or not the wake-up action has happened on a S/T conducting line, using a signal INF04 for the judgement as typical would be mistaken easily. The reason for making a mistake is when another TE, for example, a phone set, makes an outgoing call, at the same time, although the PBX transmits the signal INFO4 into the TE, the signal INF04 is not for the purpose of signaling a device to wake up. Additionally, a PBX may continuously send out the signal INFO4 even though the communication between the TE and the PBXs is cut off. Accordingly, the content of the signal INFO4 needs to be further judged. Further, in the case that software is used to distinguish between different messages from the different transmitted signals, once a device is on or going to a power-down mode, the stored data in main memory for judging the different messages of different signals by the software is gone following the step-down of the power-down mode. Therefore, the software cannot work as a predetermined function to distinguish between different transmitted signals.

### SUMMARY OF THE INVENTION

An object of the present invention is to provide a method for remotely waking up a specific device in a network, thereby reducing wasted resources.

Another object of the present invention is to provide a method of remotely waking up a specific device using an ISDN, wherein a register of an integrated circuit (IC) is used to store signal-judging information, so that a specific device is woken up even on the power-down mode.

Another object of the present invention is to provide a method of remotely waking up a specific device using an ISDN, wherein a register of the IC is used to store a changeable mask value, so that the value is compared to the signal judging information for providing more elasticity in application.

The present invention is to provide an ISDN remote wake-up method. The ISDN remote wake-up method includes the steps: checking an acknowledgement response signal received at a terminal-end device (TE) of an ISDN; comparing the content of a certain register with the wake-up information content in the acknowledgement response signal received at the TE, wherein the wake-up information includes a wake-up signal and an identifying value of an ISDN device; storing the wake-up information in storage on a specific IC when the comparison result is identified; and performing the wake-up action to the ISDN device at the power-down mode based on the stored wake-up information.

### BRIEF DESCRIPTION OF THE DRAWINGS

The present invention can be more fully understood by reading the subsequent detailed description in conjunction with the examples and references made to the accompanying drawings, wherein:
Fig. 1 shows a typical configuration of an ISDN user-network interface;
Fig. 2 shows a typical configuration of an ISDN TE device;
Fig. 3 shows a configuration for remotely waking up an ISDN device in accordance with the present invention;
Fig. 4 shows specific signals passed through the S/T reference points between an NT and a TE in accordance with the present invention; and
Fig. 5 is a flowchart of the ISDN remote wake up method in accordance with the present invention.

### DETAILED DESCRIPTION OF THE PREFERRED EMBODIMENT

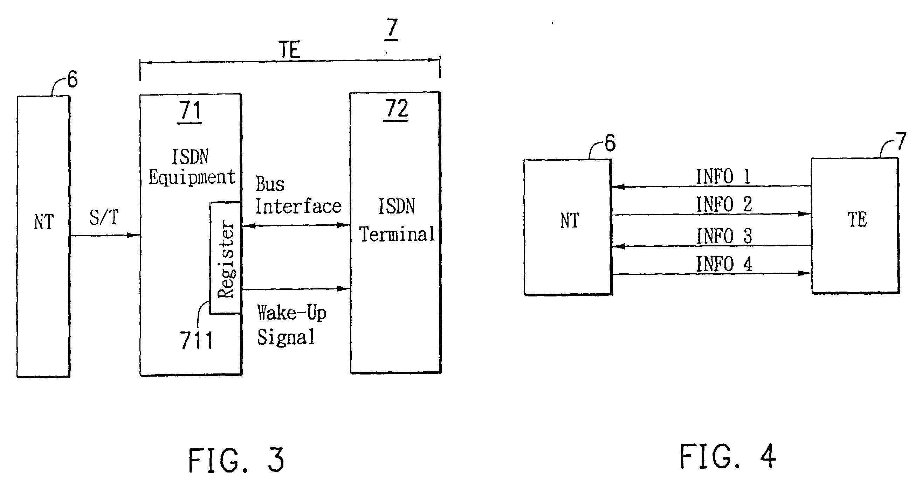

Refer to Fig. 3, a configuration for remotely waking up an ISDN device in accordance with the present invention. As shown in Fig. 3, TE 7 includes an ISDN equipment 71 and an ISDN terminal 72, wherein the interaction between the ISDN equipment 71 and the ISDN terminal 72 is included in a bus interface capable of supporting a multi-media system. The bus interface can be a Peripheral Component Interconnect (PCI), Universal Serial Bus (USB) known in the art. To store the desired ISDN information, for example, a pair representation of incoming call signal of SAPI=0 and TEI=127. In the ISDN equipment 71, two registers 711 are constructed to store the desired ISDN information. The specific signals passed through the S/T reference points between the NT 6 and TE 7 respectively have the 48 bit format structure (not shown). The format structure includes a wake-up signal transmitted from the ISDN equipment 71 to the ISDN terminal 72 to wake up the ISDN terminal 72. These specific signals are described in detail as follows.

Refer to Fig. 4, showing specific signals passed through the S/T reference points between an NT and a TE. In Fig. 4, the communication between the NT 6 and the TE7 is performed in the full-duplex way. That is, a dedicated line is used with the ability to transmit and receive signals to each other. As shown in Fig. 4, the TE 7 informs the NT 6 by a signal INFO 1 the data arrived from the TE 7 to the NT 6. The TE 7 signals a synchronous signal INFO 3, after receiving a response signal INFO 2 from the NT 6 so as to synchronize with the NT 6. The TE 7 starts to transmit data to the NT 6 after receiving an acknowledgement response signal INFO 4 from the NT 6. Alternately, the NT 6 informs the TE 7 by the response signal INFO 2 for transmitting data to the TE 7. After the TE 7 transmits a signal INFO 3 as a response signal to NT 6, the NT 6 transmits the signal INFO 4 as an acknowledgement response signal to the TE 7 and starts to transmit the data. Because the wake-up signal direction is transmitted from the NT 6 to the ISDN terminal 72 through the S/T reference points and the ISDN equipment 71, therefore, the format of the wake-up signal is determined by the ISDN terminal 72 and stored in the register 711 of the ISDN equipment 71 as shown in Fig. 3. When the acknowledgement response signal INFO 4 is transmitted to the ISDN equipment 71, the wake-up signal stored in the register 711 of the ISDN equipment 71 is used to wake up the ISDN terminal 72. The method of using the ISDN to wake up the ISDN terminal 72 is described as follows.

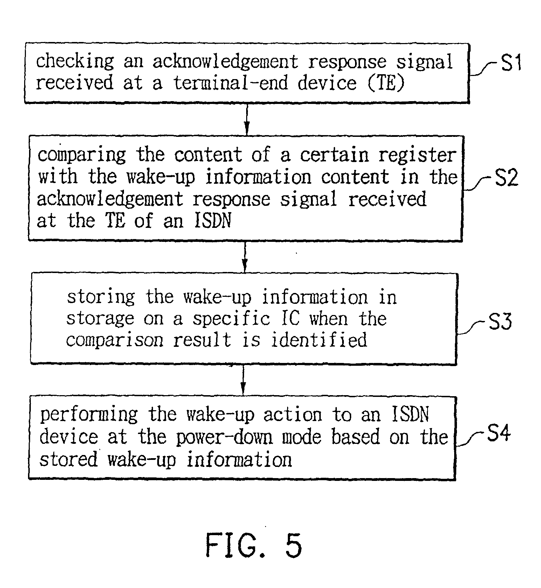

Refer to Fig. 5, a flowchart of the ISDN remote wake-up method in accordance with the present invention. In Fig. 5, the method of remotely waking up an ISDN device of the invention is carried out by the hardware, which is built in a specific IC including two registers. The method includes the steps: checking an acknowledgement response signal received at a terminal-end device (TE) of an ISDN (S1); comparing the content of a certain register with the wake-up information content in the acknowledgement response signal received at the TE (S2), wherein the wake-up information includes a wake-up signal and an identifying value of an ISDN device; storing the wake-up information in a storage of a specific IC when the comparison result is identified(S3); and performing the wake-up action to the ISDN device at the power-down mode based on the stored wake-up information(S4).

As shown in Fig. 5, in step S1, according to the ISDN standard communication protocol I.430, and the High Level Data Link Control (HDLC) format, an acknowledgement response signal INFO 4 is checked on its 13^{th} bit for logic '1' to assure that the terminal-end device (TE) has received the acknowledgement response signal INFO 4. In step S2, an address information associated with the HDLC format of a wake-up signal in the acknowledgement response signal INFO 4 is extracted to compare to the content of the certain register, wherein the certain register can be implemented as flip-flops, a SRAM, a FIFO, register and the like of a specific integrated circuit (IC) and indicates where the content to be compared is allocated. Due to the HDLC frame format, the control-bit patterns are quite different from the transmitted data and are allocated on a fixed position in a frame. Therefore, a mistaken judgement for the wake-up format rarely happens. For example, a pair of incoming call signals SAPI=0 and TEI=127 are extracted from a fixed position of the HDLC encoding frame inside an INFO 4 as a wake-up signal and compared to the content of the register. In step S3, When the result is identified after comparison, the wake-up signal is also stored in hardware. During comparison, two registers are used. One is called "address register," which defines the desired wake-up signal address. The other is called "address mask register," which represents the bit positions to be neglected in the binary value of a wake-up signal. For example, when SAPI address mask register=0 and TEI address mask register=00000011, the two least significant bits of TEI can be neglected, the values 00 to 11 (binary) being neglected. For example, with TEI addr. reg. = 127, SAPI addr. reg. = 0, TEI addr. mask reg. = 00000011, SAPI addr. mask reg. = 00, incoming frame with SAPI = 0 and TEI = 124 to 127 will be considered as valid packets and their contents will be stored. In step S4, a wake-up action for a specific ISDN device is performed according to the stored wake-up information. For, example, a PC represented by the value 011 is woken up due to the representing value (0,127) of the wake-up signal.

The invention mentioned above has the advantages of elastically choosing any ISDN device to be woken up, changing the comparison information by two registers, thereby reaching the most efficient use of the resources by using little power, such as with a standby battery.

While the invention has been described by way of example and in terms of the preferred embodiment, it is to be understood that the invention is not limited to the disclosed embodiments. On the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. An ISDN remote wake-up method, comprising the steps of:
checking an acknowledgement response signal received at a terminal-end device (TE) of an ISDN;
comparing the content of a certain register with the wake-up information content in the acknowledgement response signal received at the TE, wherein the wake-up information includes a wake-up signal and an identifying value of an ISDN device;
storing the wake-up information on a specific IC when the comparison result is identified; and
performing the wake-up action to the ISDN device at the power-down mode based on the stored wake-up information.

2. The ISDN remote wake-up method as claimed in claim 1, wherein the terminal-end device further comprises at least ISDN equipment, an ISDN terminal, and a bus interface coupled between the ISDN equipment and the ISDN terminal.

3. The ISDN remote wake up method as claimed in claim 2, wherein the bus interface is capable of supporting a multi-media system.

4. The ISDN remote wake-up method as claimed in claim 1, wherein the acknowledgement response signal is a specific signal belonging to the ISDN protocol.

5. The ISDN remote wake-up method as claimed in claim 4, wherein the step of checking an acknowledgement response signal is achieved by checking the 13^{th} bit of the acknowledgement response signal for logic '1' to determine that the terminal-end device (TE) has received the acknowledgement response signal.

6. The ISDN remote wake-up method as claimed in claim 1, wherein the wake up information is conformed to the HDLC standard.

7. The ISDN remote wake-up method as claimed in claim 1, wherein the wake-up information comprises a wake-up signal address value and a device representation value.

8. The ISDN remote wake-up method as claimed in claim 7, wherein the wake-up signal address value and the device representation value are changeable.

9. The ISDN remote wake-up method as claimed in claim 7, wherein the content in the wake-up signal address value is a pair of ISDN incoming call value as a wake-up signal.

10. The ISDN remote wake-up method as claimed in claim 7, wherein the content in the device representation value indicates the device at the power-down mode chosen to be woken up.

11. The ISDN remote wake-up method as claimed in claim 1, wherein the storage is a memory structure capable of storing and updating data.

12. A data carrier carrying processor-implementable instructions for carrying out a method according to any preceding claim.

13. A terminal-end ISDN device connectable to an ISDN network and comprising:
means for checking an acknowledgment response signal including wake-up information;
means for comparing the wake-up information with information stored on a register;
means for storing the wake-up information on the basis of the comparison result; and
means for performing a wake-up action on the ISDN device based on the stored wake-up information.

14. An ISDN network including at least one device according to claim 13.
